# EUROPÄISCHE PATENTANMELDUNG

(11) **EP 4 481 334 A2**
(43) Veröffentlichungstag der Anmeldung: **25.12.2024**
(21) Anmeldenummer: 24212269.5
(22) Anmeldetag: 22.12.2020
(51) Int. Cl.: G01D 11/24

(54) **PH-MESSZELLE**

(62) Teilanmeldung aus: 20216664.1
(71) Anmelder: optek-Danulat GmbH, 45356 Essen (DE)
(72) Erfinder: Schell, Ingo, 45355 Essen (DE)
(74) Vertreter: Schneider, Sascha

(57) **Zusammenfassung**

Die vorliegende Erfindung betrifft eine pH-Messzelle mit einem Adapter und ein System aus einer pH-Messzelle und einer Einstabmesskette.

## Beschreibung

Die vorliegende Erfindung betrifft eine pH-Messzelle und ein System gemäß den nebengeordneten Patentansprüchen.

Für pH-Messungen werden in der Industrie bevorzugt Einstabmessketten mit etwa 12mm Durchmesser und 120mm Eintauchlänge eingesetzt, wobei eine Vielzahl unterschiedlicher Ausführungen für unterschiedliche Prozessbedingungen vorhanden ist.

Vielfach ist es wünschenswert, das Volumen des Messraums möglichst klein zu halten, um möglichst wenig Fluid für die Messung zu "verbrauchen". Zudem führt ein höheres Totvolumen auch zu verstärkter Vermischung / Verschleppung von Fluid, das die Messzelle nacheinander passiert.

Meist gestaltet sich die Montage der Einstabmesskette in die Messzelle als schwierig, da eine sichere Abdichtung des Messraums gewährleistet sein muss. Dabei ist es außerdem wichtig, die Einstabmesskette nicht zu beschädigen.

Bei manchen Messzellenanwendungen ist es erforderlich, die Messzelle häufig zu reinigen oder eine Reinigung ist nur mit erheblichem Aufwand möglich.

Außerdem sind Dichtigkeitsprobleme bei der Montage und Demontage von der Einstabmesskette mit der Messzelle aufgetreten. Weiterhin sind im Stand der Technik zusätzliche Spannvorrichtung für die Abdichtung notwendig. Des Weiteren sind im Stand der Technik zum Beispiel während des Transports die Dichtungen noch nicht verpresst, weil die Spannvorrichtungen erst am Einsatzort angebracht werden, so dass Keime in den Messraum eindringen könnten.

Aufgabe der vorliegenden Erfindung ist es, die Nachteile des Stands der Technik zu beseitigen und insbesondere eine flexibel und vielseitig einsetzbare, kostengünstig herstellbare und einfach montierbare pH-Messzelle anzugeben. Zudem sollen die Montage der Messzelle an die Einstabmesskette und die Dichtigkeit verbessert werden.

Diese Aufgabe wird mit den Merkmalen der nebengeordneten Patentansprüche gelöst. Vorteilhafte Weiterbildungen der Erfindung sind in den Unteransprüchen angegeben. In den Rahmen der Erfindung fallen auch sämtliche Kombinationen aus zumindest zwei in der Beschreibung, den Ansprüchen und/oder den Figuren offenbarten Merkmalen. Bei angegebenen Wertebereichen sollen auch innerhalb der genannten Grenzen liegende Werte als Grenzwerte offenbart gelten und in beliebiger Kombination beanspruchbar sein. Zur Vermeidung von Wiederholungen sollen systemgemäß offenbarte Merkmale auch als vorrichtungsgemäß offenbart gelten und beansprucht sein. Ebenso sollen vorrichtungsgemäß offenbarte Merkmale auch als systemgemäß offenbart gelten und beansprucht sein.

Die Erfindung betrifft eine pH-Messzelle mit:
- einem Messraum und mindestens einer Öffnung für ein Fluid,
- einer pH-Messaufnahme zur Aufnahme eines stabförmigen Aufnahmeabschnitts einer Einstabmesskette zur Messung des pH-Werts des Fluids im Messraum, wobei die pH-Messaufnahme eine Einstecköffnung aufweist, durch die der Aufnahmeabschnitt in einer Steckrichtung steckbar ist,
- einem Komprimierelement zur Komprimierung eines im Aufnahmeabschnitt anordenbaren Dichtrings der Einstabmesskette zur Abdichtung des Messraums gegenüber der Umgebung, und
- einem Adapter zur Aufnahme der Einstabmesskette in einem Befestigungsbereich der Einstabmesskette,
wobei der Adapter zweiteilig mit einem ersten Adapterteil und einem zweiten Adapterteil ausgebildet ist.

Die Messzelle kann als Tank mit einer einzigen Öffnung ausgebildet sein, die Messzelle kann alternativ als durchströmbare Messzelle mit einer Eintrittsöffnung und einer Austrittsöffnung ausgebildet sein, wobei der Messraum zwischen der Eintrittsöffnung und der Austrittsöffnung angeordnet ist.

Durch den zweiteiligen Aufbau des Adapters ist es erfindungsgemäß vorteilhaft möglich, die Abdichtung des Messraums gegenüber der Umgebung zu verbessern. Weiterhin vorteilhaft ist keine zusätzliche Spannvorrichtung für die Komprimierung des Dichtrings notwendig.

Insbesondere ist es durch den zweiteiligen Aufbau des Adapters vorteilhaft erfinderisch möglich, dass die Einstabmesskette in einem speziellen hochreinen Bereich montiert werden kann und nach Verspannen des Adapters /Verpressen einer Dichtung der Messraum dicht vom Außenraum getrennt ist, so dass beim Verbringen und Verwenden an einem weniger reinen Produktionsort keine Keime eindringen können. Nach Beendigung eines Produktionslaufes kann die Messzelle mit der Einstabmesskette aus der einer Produktionsvorrichtung entnommen werden und ohne Gefahr des Austretens von Prozessfluid der Entsorgung zugeführt werden.

Bevorzugt ist vorgesehen, dass das zweite Adapterteil zur Aufnahme der Einstabmesskette im Befestigungsbereich ausgebildet ist, insbesondere durch eine Schraubverbindung, und das zweite Adapterteil in das erste Adapterteil einschraubbar ist. Dadurch ist es vorteilhaft möglich, dass die Komprimierung des Dichtrings durch das Einschrauben des zweiten Adapterteils in das erste Adapterteil erfolgen kann.

Bevorzugt ist weiterhin vorgesehen, dass durch das erste Adapterteil durch das Einschrauben des zweiten Adapterteils Druck auf das Komprimierelement ausübbar ist, wobei der Dichtring durch den Druck des ersten Adapterteils durch das Komprimierelement komprimierbar ist und der Messraums gegenüber der Umgebung abdichtbar ist. Dadurch ist es vorteilhaft möglich, dass der durch das Einschrauben des zweiten Adapterteils erzeugte Druck über das Komprimierelement optimal auf den Dichtring übertragen werden kann.

Bevorzugt ist weiterhin vorgesehen, dass das Komprimierelement ringförmig ausgebildet ist und eine abgeschrägte Komprimierfläche aufweist, wobei die Komprimierfläche am Dichtungsring anliegt. Durch die ringförmige Ausbildung kann die länglich ausgebildete Einstabmesskette durch das Komprimierelement bei der Montage durchgeschoben werden, so dass das Komprimierelement zusätzlich als seitliche Abstützung der Einstabmesskette dienen kann. Zudem ist es mit der abgeschrägten Komprimierfläche vorteilhaft möglich, dass sich der Dichtring optimal verformen kann, um die Abdichtung das Messraums gegenüber der Umgebung zu ermöglichen.

Bevorzugt ist weiterhin vorgesehen, dass der Dichtring zwischen einem Stützring und dem Komprimierelement angeordnet ist. Vorteilhaft ist es dadurch möglich, dass der Dichtring auf den Stützring gedrückt wird, so dass die Komprimierung optimal erfolgen kann. Außerdem ist der Stützring austauschbar, sodass unterschiedliche Ausbildungen der Einstabmesskette aufgenommen werden können.

Der Erfindung liegt insbesondere der Gedanke zugrunde, die Messzelle so auszubilden, dass die Einstabmesskette bei der Montage durch einen entspannten Dichtring geführt wird und erst in der eingeführten Position der Einstabmesskette eine Abdichtung durch Komprimierung des Dichtrings erfolgt. Durch die Komprimierung kann einerseits eine Dichtwirkung und andererseits eine Klemmwirkung erzeugt werden, so dass die Ausgestaltung der Messzelle zu einer Doppelfunktion der Dichtung/Messzelle führt.

Besonders vorteilhaft ist es dabei, die Messzelle zumindest teilweise, vorzugsweise überwiegend aus Kunststoff und/oder Gummi auszubilden. Somit ist eine kostengünstige Herstellung der Messzelle möglich. Außerdem ist die Messzelle als Einwegmesszelle ausführbar.

Anders ausgedrückt ist die Betriebsposition durch Aufbringung einer Komprimierkraft in Steckrichtung der Einstabmesskette ausschließlich von außerhalb der Messzelle auf den Dichtring in Kombination mit dem Adapter erreichbar. Ausschließlich von außerhalb heißt, dass an der Messzelle selbst keine mechanischen Mittel zur Druckbeaufschlagung vorgesehen sind. Die Messzelle kann somit eine äußerst einfach und kostengünstig herstellbare Geometrie aufweisen.

Auch ist es erfindungsgemäß denkbar, dass der Messraum durch einen Messzellenkörper gebildet wird, an welchem die pH-Messaufnahme angeformt ist. Dabei ist es besonders vorteilhaft, den Messzellenkörper aus zwei Hälften, ja sogar einteilig, insbesondere aus einem einheitlichen Material, herzustellen.

Die Messzelle ist als Einwegmesszelle herstellbar, insbesondere hergestellt aus überwiegend, vorzugsweise mindestens 90 %, noch bevorzugter mindestens 95 %, chemischen Elementen mit einer Ordnungszahl kleiner 17. Somit ist die Messzelle soweit gammadurchlässig, dass eine vollständige und homogene Beaufschlagung des Messraums mit Gammastrahlen zur Desinfektion möglich ist. Auf diese Weise wird die Herstellung zum Versand beziehungsweise Transport der erfindungsgemäßen Messzellen stark vereinfacht, da die Messzellen im verpackten Zustand mit Gammastrahlen beaufschlagt und entsprechend desinfiziert werden können. Somit kann eine Kontamination bei der Verpackung der Messzellen ausgeschlossen werden und die Verpackung entsprechend kostengünstig durchgeführt werden.

Durch den Stützring und das Komprimierelement ist die Messzelle optimal an verschiedene Einstabmessketten zum Einbauen in die Messzelle anpassbar. Der Stützring und das Komprimierelement können bei der Herstellung des Standardmesszellenkörpers in der jeweils passenden Form, insbesondere mit vorgegebenem Innendurchmesser, in den Messzellenkörper fixiert werden, insbesondere durch Kleben.

Vorteilhaft ist eine Klemmung des Dichtrings in der exakt vorgegebenen Einstecktiefe mit einer definierten Eintauchlänge der Einstabmesskette vorgesehen, wobei erst in der vollständig eingeschraubten Stellung eine Komprimierung des Dichtrings erfolgt.

Vorteilhaft kann der Adapter nicht nur zur Komprimierung, sondern auch zur Anpassung der Messzelle an verschiedene Einstabmessketten genutzt werden und erfüllt damit eine Doppelfunktion. Eine weitere Funktion übernimmt der Adapter, indem er die Einstabmesskette gegen Einflüsse von außen, insbesondere gegen Beschädigung, beispielsweise durch äußere Kräfte wie Stöße oder Zug, schützt. Solche Kräfte können bei ungestützten Einstabmessketten leicht zum Bruch führen.

Vorteilhaft ist der Adapter insbesondere für mehrere Messdurchgänge verwendbar, da ein Kontakt mit dem im Messraum strömenden Fluid erfindungsgemäß nicht vorgesehen ist. Der Adapter beaufschlagt den Dichtung von außen, während der Stützring auf der gegenüberliegenden Seite des Dichtrings, also zum Messraum hin, angeordnet ist.

Soweit die Komprimierung teilweise in Steckrichtung S und teilweise in Richtung des Umfangs des Aufnahmeabschnitts erfolgt, also vorzugsweise durch Beaufschlagung des Dichtrings schräg zur Steckrichtung S, wird nicht nur eine ideale Abdichtung des Messraums gegenüber der Umgebung erreicht, sondern auch eine Fixierung der Einstabmesskette im Messraum, so dass auch bei höheren Fluiddrücken eine sichere Positionierung/Fixierung der Einstabmesskette im Messraum vorgesehen ist.

Der Erfindung betrifft weiterhin System aus einer erfindungsgemäßen Messzelle und einer Einstabmesskette. Für dieses System gelten die bevorzugten Ausführungsformen und die Effekte und Vorteile wie oben für die Messzelle beschrieben entsprechend.

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Figur 1: schematisch ein erfindungsgemäßes System aus einer erfindungsgemäßen Messzelle mit einem zweiteiligen Adapter und mit montierter Einstabmesskette und
- Figur 2: eine schematische Ansicht eines ersten Teils und eines zweiten Teils des zweiteiligen Adapters,
- Figur 3: schematisch ein Stützelement des erfindungsgemäßen Systems.

In den Figuren sind gleiche Elemente und Elemente mit den gleichen Funktionen mit den gleichen Bezugszeichen gekennzeichnet.

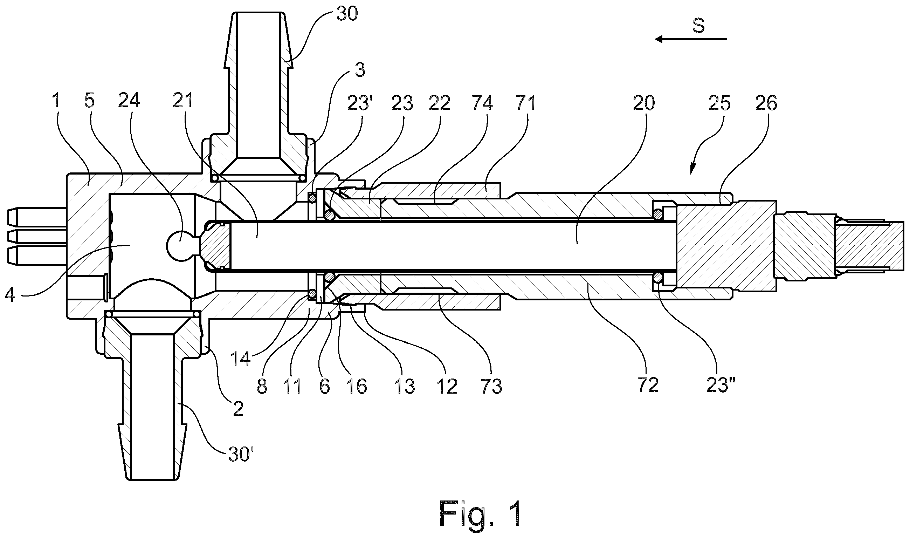

In Figur 1 ist eine beispielhafte erfindungsgemäße pH-Messzelle 1 gezeigt, die mit einem Fluid durchströmbar ist. Alternativ ist es denkbar, dass die pH-Messzelle als Tank ausgebildet ist, wobei der Tank lediglich eine einzige Öffnung aufweist. Für den Tank gilt sinngemäß das im Weiteren Ausgeführte.

Die Messzelle 1 weist einen von einem Messzellenkörper 5 begrenzten Messraum 4 auf. Der Messraum 4 wird von dem Fluid durchströmt, dessen pH-Wert mit einer in den Messraum 4 steckbaren Einstabmesskette 20 gemessen wird. Die Messzelle weist eine Eintrittsöffnung 2 zum Einlauf des Fluids und eine Austrittsöffnung 3 zum Auslauf des Fluids auf.

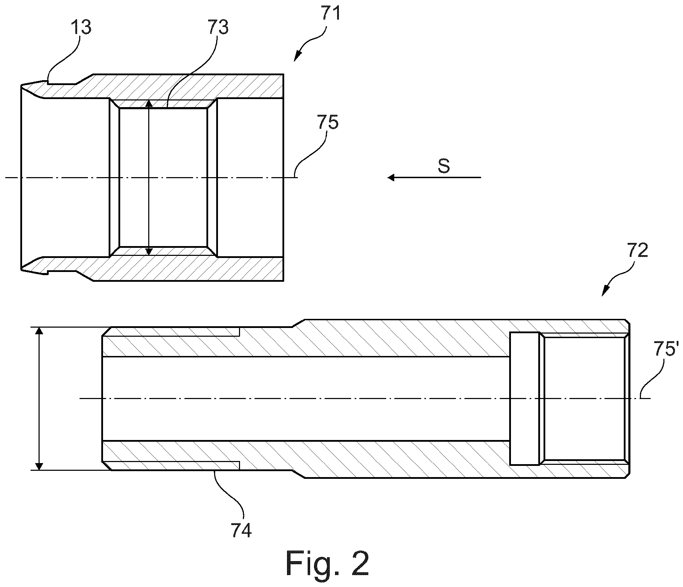

Figur 2 zeigt eine schematische Ansicht eines ersten Teils 71 und eines zweiten Teils 72 eines zweiteiligen Adapters 71, 72 einer erfindungsgemäßen Messzelle 1. Der erste Teil 71 weist mittig angeordnet ein Innengewinde 73 auf sowie eine Rastnase 13 im in Einsteckrichtung S gesehen vorderen Bereich des ersten Teils 71. Der erste Teil 71 weist entlang seiner Längsachse 75 eine durchgängige Öffnung auf. Der erste Teil 71 ist in Bezug zur Längsachse 75 rotationssymmetrisch ausgebildet. Der erste Teil 71 kann im montierten beziehungsweise eingerasteten Zustand axiale Kräfte in den Messzellenkörper einleiten, ist aber frei rotierbar.

Der zweite Teil 72 des zweiteiligen Adapters weist im in Einsteckrichtung S gesehen vorderen Bereich ein Außengewinde 74 auf. Das Außengewinde 74 ist derart ausgebildet, dass es bei der Montage des Adapters in das Innengewinde 73 des ersten Teils eingeschraubt wird. Der vordere Bereich des zweiten Teils 72 ist verjüngt gegenüber dem hinteren Teil Bereich des zweiten Teils 72 ausgebildet. Der zweite Teil 72 weist entlang seiner Längsachse 75' eine durchgängige Öffnung auf. Der erste Teil 71 ist entlang seiner Längsachse 75' rotationssymmetrisch ausgebildet.

Eine gegen das Komprimierelement 22 gerichtete Fläche vom zweiten Teil 72 erlaubt die Übertragung von Druckkräften zur Verpressung, ist aber rotationssymmetrisch zur Steckrichtung S und überträgt nur geringe Drehmomente auf das Komprimierelement 22 und die Dichtung 23.

Figur 1 zeigt weiterhin ein erfindungsgemäßes System aus dem zweiteiligen Adapter 71, 72, und der Messzelle 4. An der Messzelle 4 sind zwei Anschlussadapter 30, 30` angeordnet, an die nicht dargestellte Schläuche bzw. Leitungen für das Fluid anschließbar sind.

Eine Einstabmesskette 20 ragt in ihrer in der Figur 1 dargestellten in Steckrichtung S eingesteckten Position weniger als ein Drittel der Länge zwischen Spitze und Befestigungsgewinde der Einstabmesskette in den Messraum 4 hinein, beim konkreten Ausführungsbeispiel bis hin zu der Eintrittsöffnung 2, durch welche das Fluid in den Messraum 4 eintritt. Hierdurch wird eine Minimierung des Fluidvolumens im Messraum 4 bei gleichzeitiger Maximierung der Messstrecke entlang der pH-Elektrode erreicht.

Der in die Messzelle 1 ragende Abschnitt der Einstabmesskette 20 ist als Aufnahmeabschnitt 21 gekennzeichnet und weist eine stabförmige Form auf, wobei die Einstabmesskette 20 im Übrigen hauptsächlich eine Kreiszylinderform aufweist. An ihrem in Steckrichtung S gesehen vorderen Ende besteht die Einstabmesskette 20 aus einem sich verjüngenden Abschnitt und einer kugelförmigen Messspitze 24.

Die Einstabmesskette 20 beziehungsweise der stabförmige Aufnahmeabschnitt 21 sind durch die Einstecköffnung 6 in den Messraum 4 in der Steckrichtung S einsteckbar. Auf der Einstabmesskette 20 beziehungsweise dem stabförmigen Aufnahmeabschnitt 21 sitzt ein Dichtring 23, der bei der Montage locker sitzt und somit entlang der Einstabmesskette 20 einfach verschiebbar ist. Eine Dichtwirkung, insbesondere bei anliegendem Fluiddruck, hat der Dichtring 23 zu diesem Zeitpunkt noch nicht. Somit wird das Einstecken der Einstabmesskette 20, aber auch das Aufschieben des Dichtrings 23 auf die Einstabmesskette 20 stark vereinfacht, so dass eine Beschädigung der empfindlichen Einstabmesskette 20 vermieden wird.

Beim Einstecken, zumindest aber in der eingesteckten Position liegt der Dichtring 23 an einer Stützscheibe 11 an, die vor dem Einstecken, insbesondere bei der Herstellung des Messzellenkörpers 5, in die in Figur 5 gezeigte Position eingesetzt und vorzugsweise fixiert wird. Der Aufnahmeabschnitt 21 wird durch die Stützscheibe 11 hindurch gesteckt, bis der die Einstabmesskette 20 umgebende zweiteilige Adapter 71, 72 an einer zur Einstabmesskette 20 weisenden Schulter 12 einrastet. Hierzu sind am ersten Adapterteil 71 Rastnasen 13 vorgesehen. Alternativ ist der Adapter bereits eingerastet, bevor die Einstabmesskette 20 montiert wird.

Zwischen der Stützscheibe 11 und einem Anschlag 14 der Messzelle 4 befindet sich ein weiterer Dichtring 23', der von dem Dichtring 23 beabstandet ist, insbesondere durch die Stützscheibe 11 getrennt ist.

Die Stützscheibe 11 bildet bei der gezeigten Ausführungsform einen Anschlag und die Schulter 13 bildet einen Gegenanschlag, der in Steckrichtung S gerichtet ist und damit ein Herausziehen des zweiteiligen Adapters 71, 72 und der Einstabmesskette 20 verhindert.

Der Dichtring 23 wird in seiner Betriebsposition gehalten und geringfügig komprimiert.

Ein ringförmiges Stützelement 22, das sich zwischen der Stützscheibe 11 und dem zweiteiligen Adapter 71, 72 befindet, kontaktiert den Dichtring 23 mit einer ringförmigen Komprimierfläche 16 und durch die in Steckrichtung S weisende Spannkraft wird der Dichtring 23 an den Umfang der Einstabmesskette 20 im Aufnahmeabschnitt 21 und gleichzeitig an die Stützscheibe 11 gepresst. Hierdurch wird der Messraum 4 abgedichtet, indem der Dichtring 23 dicht an der Stützscheibe 11 und gleichzeitig dicht an dem Umfang des Aufnahmeabschnitts 21 anliegt.

Der zweiteilige Adapter 71, 72 erstreckt sich von dem Aufnahmeabschnitt 21 bis zu einem Fixierabschnitt 25 der Einstabmesskette 20 und schützt damit die Einstabmesskette 20 wirksam vor Beschädigungen. Ein weiterer Dichtring 23" befindet sich im Fixierabschnitt 25 zwischen dem zweiten Adapterteil 72 und der Einstabmesskette 20.

Die Montage der Einstabmesskette 20 mit der Messzelle 1 ist denkbar einfach und durch Vorsehen verschiedener zweiteilige Adapter 71, 72 und/oder Stützscheiben 11 und/oder Stützelemente 22 ist das System universell einsetzbar.

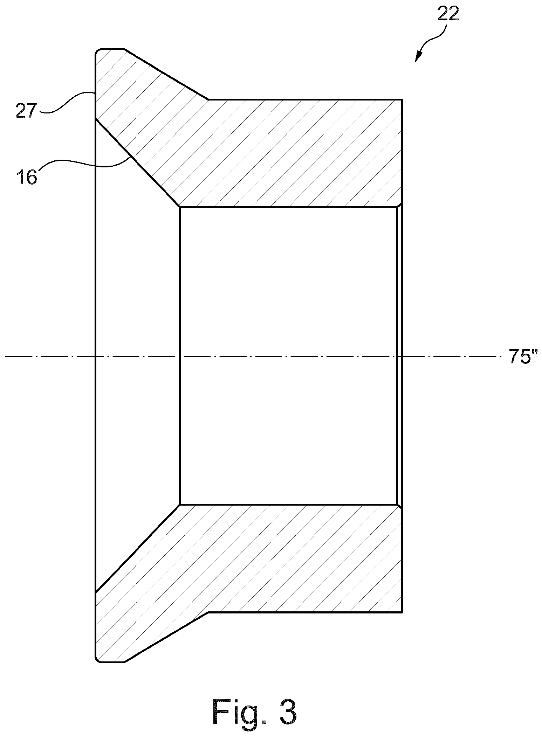

Figur 3 zeigt schematisch das Stützelement 22 in einer Einzelansicht. Stützelement 22 ist rotationssymmetrisch zu seiner Längsachse 75" ausgebildet. Das Stützelement 22 weist eine Durchgangsöffnung entlang der Längsachse 75" auf. Das Stützelement 22 weist die Komprimierfläche 16 auf sowie einen Anschlag 27. Im montierten Zustand liegt der Anschlag 27 an der Stützscheibe 11 an und die Komprimierfläche 16 komprimiert den Dichtring 23.

Zur Montage der Einstabmesskette 20 mit der Messzelle 1 wird zunächst eine Verschlusskappe aus dem zweiten Adapterteil 72 entfernt. Die Einstabmesskette 20 wird in den zweiteiligen Adapter 71, 72 eingeführt und im Befestigungsbereich 26 mit dem hinteren Teil des zweiten Adapterteils 72 im Fixierabschnitt 25 verschraubt. Der Dichtring 23" wird hierdurch komprimiert und dichtet den Bereich zwischen zweitem Adapterteil 72 und Einstabmesskette 20 im Fixierbereich 25 ab. Danach wird das zweite Adapterteil 72 weiter in das erste Adapterteil 71 eingeschraubt. Dadurch drückt das erste Adapterteil 71 in Steckrichtung S auf das Komprimierelement 22. Das Komprimierelement 22 drückt dadurch in Steckrichtung S mit der Komprimierfläche 16 auf den Dichtring 23. Der Dichtring 23 wird dadurch komprimiert und dichtet den Bereich zwischen Einstabmesskette 20 und dem Komprimierelement 22 ab.

Die zuvor beschriebene Ausführungsform ist lediglich als beispielhafte Variante der Erfindung anzusehen und schränkt den Kerngedanken der Erfindung keinesfalls ein.

### Bezugszeichenliste

- 1: Messzelle
- 2: Eintrittsöffnung
- 3: Austrittsöffnung
- 4: Messraum
- 5: Messzellenkörper
- 6: Einstecköffnung
- 71: Erstes Adapterteil
- 72: Zweites Adapterteil
- 73: Innengewinde
- 74: Außengewinde
- 75, 75': Längsachse
- 75": Längsachse
- 8: pH-Messaufnahme
- 11: Stützring
- 12: Schulter
- 13: Rastnasen
- 14: Anschlag
- 16: Komprimierfläche
- 20: Einstabmesskette
- 21: Aufnahmeabschnitt
- 22: Komprimierelement
- 23,: Dichtring
- 23' ,23": Dichtring
- 24: Messspitze
- 25: Fixierabschnitt
- 26: Befestigungsbereich
- 27: Anschlag
- 30, 30`: Anschlussadapter
- S: Steckrichtung

## Patentansprüche

1. pH-Messzelle (1) mit:
- einem Messraum (4) und mindestens einer Öffnung (2,3) für ein Fluid,
- einer pH-Messaufnahme (8) zur Aufnahme eines stabförmigen Aufnahmeabschnitts (21) einer Einstabmesskette (20) zur Messung des pH-Werts des Fluids im Messraum (4), wobei die pH-Messaufnahme (8) eine Einstecköffnung (6) aufweist, durch die der Aufnahmeabschnitt (21) in einer Steckrichtung (S) steckbar ist,
- einem Komprimierelement (22) zur Komprimierung eines im Aufnahmeabschnitt (21) anordenbaren Dichtrings (23) der Einstabmesskette (20) zur Abdichtung des Messraums (4) gegenüber der Umgebung, und
- einem Adapter (71, 72) zur Aufnahme der Einstabmesskette (20) in einem Befestigungsbereich (26) der Einstabmesskette (20),
**dadurch gekennzeichnet, dass** der Adapter (71, 72) zweiteilig mit einem ersten Adapterteil (71) und einem zweiten Adapterteil (72) ausgebildet ist.

2. Messzelle (1) nach Anspruch 1, wobei das zweite Adapterteil (72) zur Aufnahme der Einstabmesskette (20) im Befestigungsbereich (26) ausgebildet ist, insbesondere durch eine Schraubverbindung, und das zweite Adapterteil (72) in das erste Adapterteil (71) einschraubbar ist.

3. Messzelle (1) nach mindestens einem der Ansprüche 1 bis 2, wobei durch das erste Adapterteil (71) durch das Einschrauben des zweiten Adapterteils (72) Druck auf das Komprimierelement (22) ausübbar ist, wobei der Dichtring (23) durch den Druck des ersten Adapterteils (71) durch das Komprimierelement (22) komprimierbar ist und der Messraums (4) gegenüber der Umgebung abdichtbar ist.

4. Messzelle (1) nach mindestens einem der Ansprüche 1 bis 3, wobei das Komprimierelement (22) ringförmig ausgebildet ist und eine abgeschrägte Komprimierfläche (16) aufweist, wobei die Komprimierfläche (16) am Dichtungsring (23) anliegt.

5. Messzelle (1) nach mindestens einem der Ansprüche 1 bis 4, wobei der Dichtring (23) zwischen einem Stützring (11) und dem Komprimierelement (22) angeordnet ist.

6. Messzelle (1) nach mindestens einem der vorhergehenden Ansprüche, bei der Messraum (4) durch einen Messzellenkörper (5) gebildet wird, an welchem die pH-Messaufnahme (8) angeformt ist.

7. System aus einer Messzelle (1) nach mindestens einem der Ansprüche 1 bis 6 und einer Einstabmesskette (20).
